# EUROPÄISCHE PATENTANMELDUNG

(11) **EP 4 542 621 A1**
(43) Veröffentlichungstag der Anmeldung: **23.04.2025**
(21) Anmeldenummer: 24207563.8
(22) Anmeldetag: 18.10.2024
(51) Int. Cl.: H01J 49/04, G01N 1/28, G01N 1/04

(54) **ABLATIONSVORRICHTUNG**

(30) Priorität: 20.10.2023 DE 202023106081 U
(71) Anmelder: Helmholtz-Zentrum für Ozeanforschung Kiel (GEOMAR), 24148 Kiel (DE)
(72) Erfinder: Fietzke, Jan, 24211 Rosenfeld (DE)
(74) Vertreter: Wallinger Ricker Schlotter Tostmann

(57) **Zusammenfassung**

Eine Ablationskammer-Gasfluss-Vakuum-Pumpe-Anordnung zur Laser-Ablation für Feststoffanalytik weist eine Ablationskammer zur Benutzung mit einem Laser, eine Gasfluss-Vakuum-Pumpe eine Gaszufuhr für Zellgas und eine Gaszufuhr für Mischgas auf. Die Gasfluss-Vakuum-Pumpe weist ein erstes Rohr für Probengas, ein zweites Rohr für Mischgas, eine Düse und einen Expansionsraum auf. Die Gasfluss-Vakuum-Pumpe ist in Gasflussrichtung hinter der Ablationskammer angeordnet und das erste Rohr ist von der Ablationskammer abgehend angeordnet. Das erste Rohr ist an der Düse am Übergang zum Expansionsraum endend angeordnet und das zweite Rohr ist zum Expansionsraum endend angeordnet. Die Gaszufuhren und die die Gasfluss-Vakuum-Pumpe sind so konfiguriert, dass die Ablationskammer mit Unterdruck gegenüber atmosphärischem Druck betrieben wird. Die Ablationskammer-Gasfluss-Vakuum-Pumpe-Anordnung ist so eingerichtet, dass a) in der Ablationskammer aus einer Probe ein primäres Ablations-Plasma gebildet und zu einem Aerosol kondensiert wird und zusammen mit dem Zellgas das Probengas bildet; b) die Gasfluss-Vakuum-Pumpe über die Düse sich in dem ersten Rohr befindliches Probengas aus der Ablationskammer durch die Strömung des Mischgases in dem zweiten Rohr mitfördert und c) in dem Expansionsraum das Probengas und das Mischgas vor Weiterführung zu einer Analytik zusammengeführt werden.

## Beschreibung

Hiermit wird der gesamte Inhalt der Prioritätsanmeldung, DE 20 2023 106 081.1 (Gebrauchsmuster) durch Bezugnahme Bestandteil der vorliegenden Anmeldung.

Die Erfindung betrifft eine Ablationsvorrichtung zur Laser-Ablation für Feststoffanalytik. Die Erfindung erstreckt sich ferner auf eine Ablationskammer-Gasfluss-Vakuum-Pumpe-Anordnung umfassend eine Ablationskammer zur Verwendung mit einem Laser, eine Gasfluss-Vakuum-Pumpe, eine Gaszufuhr für Zellgas, insbesondere eine regelbare Gaszufuhr für Zellgas, und eine Gaszufuhr für Mischgas, insbesondere eine regelbare Gaszufuhr für Mischgas. Die Anordnung kann ferner eine Druckmesseinrichtung aufweisen.

Laser-Ablation für Feststoffanalytik ist ein etabliertes Verfahren. Ursprünglich von (Geo)-Chemikern entwickelt, um Gesteinsproben direkt zu analysieren, hat es sich über die Jahre dynamisch auf weitere Forschungsgebiete ausgebreitet, von der Geochemie zu den Materialwissenschaften bis hin zur medizinischen Forschung. Insbesondere die Kombination aus hoher örtlicher Auflösung (bis wenige µm) und hohe Nachweisstärke (<µg/g) für viele Elemente bis hin zu direkten Isotopenanalysen mit Promille-Präzision machen es zu einem versatilen leistungsstarken Analyseverfahren.

Typischerweise wird für die Laser-Ablation eine Probe in einer Ablationskammer oder auch Probenkammer kontrolliert mit einem Laser beschossen. Das dabei mobilisierte Probenmaterial bildet dabei ein primäres Ablations-Plasma (pAP oder auch "plasma plume"), welches bei der Expansion in der Ablationskammer abkühlt und zu einem Aerosol kondensiert. Dieses Aerosol wird mithilfe des sogenannten Zellgases aus der Ablationskammer zum eigentlichen Analysegerät (beispielsweise ICP-MS oder ICP-OES) transportiert. Bei dem Zellgas handelt es sich um ein Inertgas, typischerweise Helium (selten Argon), um chemische Reaktionen mit dem Probenmaterial zu unterbinden.

Aus dem **Stand der Technik** bekannt ist der Aufbau von Laser-Ablations-Geräten für die Feststoffanalytik und von Detektionsvorrichtungen von Proben in einem Gasstrom durch Laser-Ablation allgemein.

So ist aus der DE 11 2011 103 405 T5 beispielsweise ein Funkenemissions-Teilchendetektor bekannt, bei dem ein Partikelaerosol vom Ort einer Probe zur Detektion transportiert wird, wobei ein Probengas zugeführt und/oder abgepumpt wird.

Aus der US 9 496 124 B2 ist eine Laser-Ablationszelle bekannt, bei der eine Zellgeometrie und die damit einhergehenden Strömungsmuster verbessert werden, um Auswaschzeiten für die Partikel zu verringern. Die Ablation in Helium wird konventionell unter Normaldruck durchgeführt. Der Erfinder hat erkannt, dass es derzeit kein kommerzielles System gibt, bei dem ein aktives Pumpen eines Proben-Aerosol/Zellgas-Gemisches aus der Ablationskammer zum Einsatz kommt, da entsprechende (mechanische) Pumpen eine Partikelfalle darstellen, also Probenverlust und -verschleppung verursachen würden. Deshalb ist es die gegenwärtig verwendete Praxis, die Ablationskammer aktiv mit einer äußeren Gasversorgung für das Probengas zu betreiben, welches frei zum Ausgang der Kammer strömen kann. Da die Ausgangsseite unter Atmosphären-Druck betrieben wird (beispielsweise bei Anschluss an eine ICP-Ionenquelle) bilden sich im Inneren der Ablationskammer Druckverhältnisse aus, die geringfügig über Atmosphärendruck liegen ("soft over-pressure").

Die Praxis zeigt, dass eine Reihe von Parametern die Güte der Analysen beeinflussen, Parameter, welche die Ausbildung des primären Ablations-Plasmas, die Kondensation des Aerosols sowie dessen Transport betreffen. Da das primäre Ablations-Plasma innerhalb der Ablationskammer bei seiner Expansion/Abkühlung/Kondensation gegen den Druck des Zellgases arbeiten muss, beeinflusst beispielsweise die Wahl des Zellgases die Prozessabläufe der Plasma-Kondensat-Transformation entscheidend. So beobachtet man in der Praxis, dass bei Verwendung von Helium als Zellgas, im Vergleich mit Argon, die räumliche Ausdehnung des primären Ablations-Plasmas größer ist, sich weniger große Aerosol-Partikel bei der Kondensation bilden und in der Folge weniger Material auf der Probenoberfläche niederschlägt. Des Weiteren führt die Bildung eines feineren Aerosols zu einer geringeren Elementfraktionierung innerhalb der Aerosol-Partikel und zu einem erleichterten vollständigen thermischen Aufschluss des Probenaerosols im ICP-Plasma.

Die Ursache für die Unterschiede zwischen Helium und Argon sollten primär in der jeweiligen Dichte begründet sein (ca. 0,18 kg/m³ für Helium im Gegensatz zu ca. 1,8 kg/m³ für Argon). Argon setzt aufgrund seiner circa 10mal höheren Dichte der Expansion des primären Ablations-Plasmas einen wesentlich stärkeren Widerstand entgegen, behindert also die schnelle Expansion und führt zu einer Kondensation aus einem noch dichteren Plasma. Letzteres führt zur verstärkten Bildung größerer Kondensat-Partikel mit stärkerer interner chemischer Zonierung (Elementfraktionierung), welche schlechter transportiert werden können (Partikelfraktionierung beim Transport), verstärkt auf der Probenoberfläche abscheiden und beim verbleibenden transportablen Aerosol in der ICP-Quelle schlechter aufgeschlossen werden können (Elementfraktionierung).

Selbst bei Nutzung von Helium (welches zusätzlich erhebliche Kosten im laufenden Betrieb erzeugt) lassen sich die beschriebenen Effekte nicht komplett eliminieren.

Der Artikel "High efficiency aerosol dispersion cell for laser ablation-ICP-MS" von J. Pisonero, D. Fliegel und D. Günther, Journal of Analytical Atomic Spectrometry, dessen Inhalt am 3. August 2006 veröffentlicht wurde, offenbart eine Ablationskammer, die im Wesentlichen in eine erste und zweite Teilkammer unterteilt ist, wobei sich eine Probe in der ersten Teilkammer befindet. Zu der ersten Teilkammer zugeführtes Zellgas kann zusammen mit freigesetztem Probenmaterial über eine kleine Öffnung in die zweite Teilkammer gelangen, die zu einer Analysevorrichtung führt. Der Druck in der zweiten Teilkammer ist gegenüber dem Druck in der ersten Teilkammer leicht abgesenkt, nämlich um weniger als 100 mbar. Bei der in diesem Artikel offenbarten Anordnung ist davon auszugehen, dass aufgrund des zu der ersten Teilkammer zugeführten Zellgases der Druck in der ersten Teilkammer bzw. in der Ablationskammer insgesamt ein absoluter Druck herrscht, der (gegebenenfalls leicht) über dem atmosphärischen Druck liegt. Insbesondere bei der Verwendung von Argon ergeben sich dann die oben erläuterten Probleme.

Der vorliegenden Erfindung liegt die **Aufgabe** zugrunde, eine alternative Ablationsvorrichtung bereitzustellen, insbesondere eine Ablationsvorrichtung, welche die bekannten Mängel des Standes der Technik beseitigt oder zumindest abmildert.

**Gelöst** wird diese Aufgabe mit einer Ablationskammer-Gasfluss-Vakuum-Pumpe-Anordnung und einem Verfahren gemäß den unabhängigen Ansprüchen.

Auch offenbart ist eine Unterdruck-Ablationskammer-Gasfluss-Vakuum-Pumpe-Anordnung zur Laser-Ablation für Feststoffanalytik, die Folgendes umfasst:
- eine Ablationskammer mit einem Laser;
- eine Gasfluss-Vakuum-Pumpe;
- eine regelbare Gaszufuhr für Zellgas;
- eine regelbare Gaszufuhr für Mischgas und
- eine Druckmesseinrichtung. wobei
- die Gasfluss-Vakuum-Pumpe ein inneres Rohr für Probengas, ein äußeres Rohr für Mischgas, eine Düse und einen Expansionsraum aufweist;
- die Gasfluss-Vakuum-Pumpe in Gasflussrichtung hinter der Ablationskammer angeordnet ist;
- das innere Rohr von der Ablationskammer abgehend angeordnet ist;
- das äußere Rohr nach der Ablationskammer und vor dem Expansionsraum dem inneren Rohr zugeführt und konzentrisch um das innere Rohr angeordnet ist;
- das innere Rohr an der Düse am Übergang zum Expansionsraum und das äußere Rohr in dem Expansionsraum endend angeordnet sind;
- die regelbaren Gaszufuhren und die Druckmesseinrichtung für eine Kontrolle und Regelung der Betriebsbedingungen in der Ablationskammer ausgebildet sind, wobei die Ablationskammer mit Unterdruck betrieben wird;
   wobei
- in der Ablationskammer aus einer Probe ein primäres Ablations-Plasma gebildet und zu einem Aerosol kondensiert wird und zusammen mit dem Zellgas das Probengas bildet;
- die Gasfluss-Vakuum-Pumpe über die Düse sich in dem inneren Rohr befindliches Probengas aus der Ablationskammer durch hohe Strömungsgeschwindigkeiten des Mischgases in dem äußeren Rohr mitfördert und
- in dem Expansionsraum das Probengas und das Mischgas vor Weiterführung zu einer Analytik zusammengeführt werden.

Durch die Verwendung einer Gasfluss-Vakuum-Pumpe wird es möglich, eine Anordnung bereitzustellen, die ein aktives Pumpen des Proben-Aerosol/Zellgas-Gemisches aus der Ablationskammer ohne Ausbildung einer Partikelfalle erlaubt.

Außerdem können durch Absenkung des Druckes in der Ablationskammer die Bedingungen für die Expansion des Ablations-Plasmas in der Probenkammer verbessert werden.

Schließlich können der Aufbau der Ablationskammer, die Nachweisempfindlichkeit der Probenanalyse und der Betriebsmitteleinsatz verbessert werden.

Die Analytik kann insbesondere als Massenspektrometrie mit induktiv gekoppeltem Plasma (ICP-MS) ausgebildet sein.

Auch können die regelbaren Gaszufuhren in einer bevorzugten Ausführungsform als Massendurchflussregler ausgebildet sein.

Als Zellgas und Mischgas werden Inertgase verwendet. Es können als Zellgas insbesondere Helium oder Argon eingesetzt werden und als Mischgas kann insbesondere Argon eingesetzt werden.

In der Ablationskammer kann insbesondere bei Betrieb ein Unterdruck auf (deutlich) unter 1bar, also <1bar oder <<1bar, wobei dies insbesondere einem Absolutdruck von ≤ 0,9 bar und/oder ≤ 0,75 bar und/oder ≤ 0,6 bar und/oder ≤ 0,2 bar entsprechen kann, ausgebildet werden.

Ein mögliches Betriebsverfahren für eine erfindungsgemäße Unterdruck-Ablationskammer-Gasfluss-Vakuum-Pumpe-Anordnung kann zumindest die nachfolgenden Schritte aufweisen:
- Zufluss von Zellgas geregelt über Massendurchflussregler in die Ablationskammer;
- Beschuss von in der Ablationskammer befindlichem Probenmaterial mit Laserstrahlen durch das Zellfenster der Ablationskammer und Bildung eines primären Ablations-Plasmas und nachfolgende Expansion und Kondensation zu einem Aerosol;
- Bildung eines Probengases aus Zellgas und Aerosol und Eintritt von Probengas in das innere Rohr der Gasfluss-Vakuum-Pumpe;
- Zufluss von Mischgas geregelt über Massendurchflussregler in das äußere Rohr;
- Mitförderung von sich in dem inneren Rohr der Gasfluss-Vakuum-Pumpe befindlichen Probengas aus der Ablationskammer über die Düse durch hohe Strömungsgeschwindigkeiten des Mischgases in dem äußeren Rohr der Gasfluss-Vakuum-Pumpe;
- Zusammenführung von Probengas und Mischgas in dem Expansionsraum der Gasfluss-Vakuum-Pumpe vor Weiterführung zu einer Analytik und
- Kontrolle des Druckes in der Ablationskammer über eine Druckmesseinrichtung, wobei der Betrieb der Ablationskammer im Unterdruck erfolgt, und eine Einstellung und Regelung über die Massendurchflussregler von Zellgas und Mischgas erfolgt.

Durch das (deutliche) Absenken des Druckes in der Ablationskammer - jedenfalls unter den atmosphärischen Druck - können die Bedingungen für die Expansion des primären Ablations-Plasmas in der Ablationskammer verbessert bzw. optimiert und die beschriebenen Probleme reduziert bzw. minimiert werden. Wie bereits zuvor erwähnt wird dieses bislang nicht praktisch angewendet, da aktive Pumpen zumeist mechanische Komponenten einschließen, welche Kondensat/Probenaerosol zurückhalten und damit verschleppen oder nicht nutzbar machen.

Diesseitig erfindungsgemäß erfolgt der Abtransport des Probengases aus der Ablationskammer über eine Gasfluss-Vakuum-Pumpe mit einer Pump-Düse. Eine solche Pumpe ist vergleichbar mit beispielsweise einer Wasserstrahlpumpe oder auch Venturi-Pumpe oder auch einem konventionellen Probenzerstäuber für ICP. Bei einer solchen Pumpe wird Gas durch die hohen Strömungsgeschwindigkeiten beispielsweise in einem äußeren Rohr aus einem beispielsweise konzentrisch innenliegenden Rohr mitgefördert.

Diese Anordnung und dieses Verfahren lassen sich insbesondere in bestehenden Messanordnungen leicht umsetzen, da zu dem eingesetzten Zellgas ohnehin weiteres Mischgas, insbesondere Argon, vor der Gaseinspeisung in die ICP-Quelle beigemischt wird. Durch eine geeignete Geometrie der beiden konzentrischen Röhren (Venturi-Düse) wird eine effektive und effiziente Pumpe für das Probengas aus der Ablationskammer gebildet, welche zudem nicht die typischen Nachteile mechanischer Pumpen aufweist. Geometrie und Strömungsgeschwindigkeit in der äußeren (mit Mischgas betriebenen Röhre) definieren die Pumpleistung, welche durch kontrollierte Gaszufuhr in die Ablationskammer in einem Druck innerhalb der Kammer resultiert, welcher deutlich unter Atmosphärendruck liegt. Trotz des niedrigen Drucks innerhalb der Kammer, kann der resultierende Gesamt-Gas-Fluss aber nach wie vor problemlos an die ICP-Quelle (unter Atmosphärendruck) angeschlossen werden.

Neben Anordnungen mit einem äußeren Rohr und einem konzentrisch innen liegenden Rohr sind auch andere Rohranordnungen möglich. Allgemein können Rohranordnungen verwendet werden, bei denen ein sich in einem ersten Rohr befindliches Gas - hier das Probengas aus der Ablationskammer- durch die Strömung eines Gases in einem zweiten Rohr- hier ein zugeführtes Mischgas - mitgefördert wird. Die Strömungsgeschwindigkeit des Gases in dem zweiten Rohr ist dabei höher als die Strömungsgeschwindigkeit des Gases in dem ersten Rohr. Im Wesentlichen gilt: Je höher die Strömungsgeschwindigkeit des Gases in dem zweiten Rohr ist, desto größere Druckabsenkungen in dem ersten Rohr können erreicht werden.

Für die Kontrolle und Regelung des Unterdruckbetriebs der Ablationskammer kann diese über eine Druckmesseinrichtung und eine regelbare Gaszufuhr verfügen. Letztere wird typischerweise über einen sogenannten Massendurchflussregler (MFC) technisch umgesetzt. Es sind aber auch Ausführungsformen möglich, bei denen die Gaszufuhr (Zellgas und/oder Mischgas) nicht regelbar ist und/oder keine Druckmesseinrichtung für die Ablationskammer vorhanden ist. Beispielsweise können Rohrdurchmesser der für die Gaszufuhr verwendeten Rohre und gegebenenfalls weitere Parameter der Anordnung so gewählt sein, dass sich in der Ablationskammer ein (geeigneter) Unterdruck gegenüber atmosphärischem Druck einstellt.

Abhängig von der erreichten Druckabsenkung ist es möglich, das Expansionsvermögen des primären Ablations-Plasmas im Helium-Betrieb noch einmal deutlich zu verbessern oder dass selbst bei Betrieb der Ablationskammer mit Argon als Zellgas ein Verhalten des primären Ablations-Plasmas erreichbar ist, welches dem Helium-Betrieb bei "soft over-pressure" entspricht. Beides resultiert in einer Verbesserung der analytischen Performance und spart obendrein Kosten (Helium) ein.

Mit der erfindungsgemäßen Unterdruck-Ablationskammer-Gasfluss-Vakuum-Pumpe-Anordnung wird es möglich, eine Ablation einer Feststoff-Probe unter geringerem Druck durchzuführen, wodurch eine erleichterte Expansion des primären Ablations-Plasmas und damit einhergehend eine Kondensation in ein feineres Aerosol bewirkt wird. Dies wiederum bewirkt eine erhöhte Transporteffizienz und Probenausbeute und führt zu einer geringeren Elementfraktionierung innerhalb der Aerosol-Partikel und zu einem erleichterten vollständigen thermischen Aufschluss des Probenaerosols im ICP-Plasma.

Die Ablationskammer kann einen Probenhalter aufweisen, der eingerichtet ist, die Probe so zu halten, dass bei bestimmungsgemäßer Benutzung der Anordnung ein Laserstrahl, der von dem mit der Anordnung zu benutzenden Laser ausgeht, auf einen Flächenabschnitt der Probe trifft, dem eine Flächennormale zugeordnet ist, die von der Probe weg gerichtet ist und die eine Richtungskomponente aufweist, die bezogen auf die Schwerkraftrichtung nach unten gerichtet ist. Beispielsweise kann der Probenhalter die Probe so in der Ablationskammer halten, dass eine Fläche, auf die der Laserstrahl treffen soll, nach unten weist. Dabei muss diese Fläche nicht horizontal (in Bezug auf die Schwerkraft) angeordnet sein, sondern kann um einen spitzen, von 0° verschiedenen Winkel gegenüber einer horizontalen Ebene gekippt sein. Dies ermöglicht es, für den Transport von durch den Laserstrahl von der Probe abgelöstem Probenmaterial zusätzlich die Schwerkraft auszunutzen. Das abgelöste Probenmaterial bzw. das Aerosol wird dann also nicht nur durch den Unterdruck, der durch die Gasfluss-Vakuum-Pumpe erzeugt wird, in Richtung zum Analysegerät transportiert, sondern die Schwerkraft kann diesen Transport unterstützen.

Unter dem Begriff "bestimmungsgemäße Benutzung" ist vorliegend insbesondere eine bestimmungsgemäße Orientierung der Anordnung oder zumindest der Ablationskammer zu verstehen. Wenn die Anordnung oder die Ablationskammer beispielsweise eine Standfläche oder Stützbeine oder Gummifüße oder Ähnliches aufweist, die normalerweise nach unten weisen (sollen), so kann dies die bestimmungsgemäße Orientierung definieren.

Eine Fläche im mathematischen Sinn hat immer zwei Flächennormalen, also zwei in entgegengesetzte Richtungen weisende räumliche Vektoren, die senkrecht auf der Fläche stehen. Unter den Begriff "Flächennormale, die von der Probe weg gerichtet ist" ist bei der vorliegenden Anordnung nur einer dieser räumlichen Vektoren gemeint, nämlich derjenige, der in den weitgehend leeren Raum der Ablationskammer zeigt und nicht derjenige, der in die Probe hinein zeigt.

Im mathematischen Sinn ist eine Flächennormale immer auf einen Flächenpunkt bezogen. Je nach Oberflächenstruktur einer realen Probe können die Flächennormalen, die nah beieinanderliegenden Flächenpunkten zugeordnet sind, gegebenenfalls in deutlich unterschiedliche Richtungen orientiert sein. Vorliegend kann daher als "Fläche", auf der die oben erwähnte Flächennormale senkrecht stehen soll, gegebenenfalls eine (ebene) Fläche angesehen werden, die sich als "best fit" über einen beispielsweise kreisförmigen Flächenbereich der Probe ergibt, der einen Durchmesser von ca. 1mm oder wenigen Millimetern aufweist, beispielsweise 2mm, 3mm, 4mm oder 5mm.

Nachfolgend wird die Erfindung anhand der beiliegenden, schematischen Figuren in der **Figurenbeschreibung** beschrieben, wobei diese die Erfindung erläutern sollen und nicht zwingend beschränkend zu werten sind.

Es zeigen:
- Fig. 1: eine beispielhafte Darstellung einer Ausführungsvariante einer Anordnung zur Laser-Ablation nach dem Stand der Technik,
- Fig. 2: eine beispielhafte Darstellung einer Ausführungsvariante einer erfindungsgemäßen Unterdruck-Ablationskammer-Gasfluss-Vakuum-Pumpe-Anordnung und
- Fig. 3: eine beispielhafte Darstellung einer Ausführungsvariante einer Ablationskammer einer erfindungsgemäßen Unterdruck-Ablationskammer-Gasfluss-Vakuum-Pumpe-Anordnung.

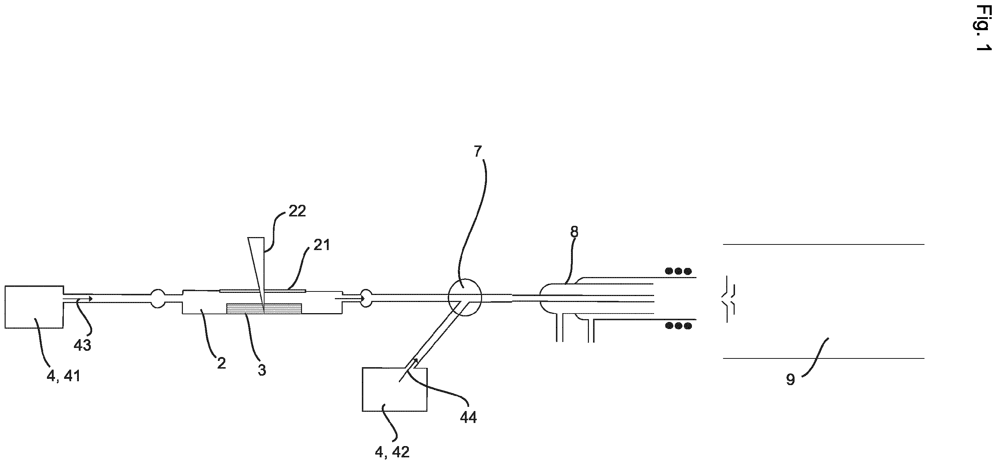

In **Fig. 1** wird eine beispielhafte Darstellung von einer Ausführungsvariante einer Anordnung zur Laser-Ablation nach dem Stand der Technik dargestellt. Über eine regelbare Gaszufuhr für Zellgas 41 wird Zellgas 43 in eine Ablationskammer 2 eingeführt. In der Ablationskammer 2 befindet sich eine Probe 3, die durch ein Zellfenster 21 mit einem Laserstrahl 22 beschossen wird. Durch den Laserbeschuss der Probe 3 bildet sich ein primäres Ablations-Plasma. Das primäre Ablations-Plasma kondensiert in der Ablationskammer 2 zu einem Aerosol. Das Aerosol wird zusammen mit dem Zellgas 43 zu einer Plasma-Ionenquelle 8 mit nachfolgendem Massenspektrometer 9 transportiert. Während des Transports wird dem Zellgas 43, enthaltend das Aerosol, über ein Verbindungsstück 7 vor Erreichen der nachfolgenden Plasma-Ionenquelle Mischgas 44 zugeführt.

Ein aktives Pumpen des Aerosol enthaltenden Zellgases 43 (Probengas) aus der Ablationskammer 2 findet nicht statt. Bis heute stellen hierfür einsetzbare mechanische Pumpen eine Partikelfalle, also Probenverlust und Probenverschleppung, dar. Nach dem Stand der Technik ist es Praxis, die Ablationskammer aktiv mit einer äußeren Gasversorgung (Zellgas) zu versorgen, bei der das Probengas frei zum Ausgang der Ablationskammer strömt. Da die Ausgangsseite hierbei unter Atmosphärendruck betrieben wird, beispielsweise bei Anschluss an eine nachfolgende ICP-lonenquelle, bilden sich hierbei im Inneren der Ablationskammer Druckverhältnisse aus, die geringfügig über Atmosphärendruck liegen. Dies wird auch als "soft over-pressure" bezeichnet.

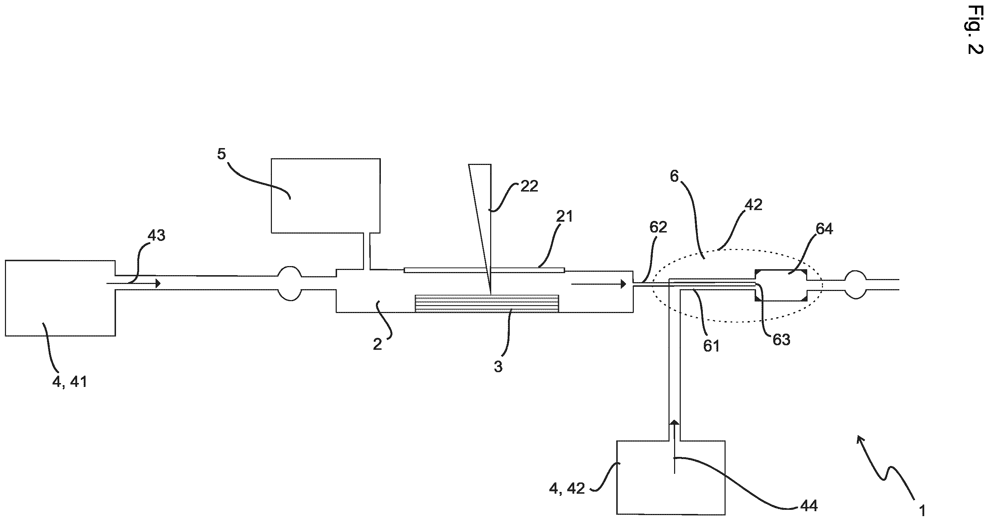

**Fig. 2** zeigt eine beispielhafte Darstellung einer Ausführungsvariante einer erfindungsgemäßen Unterdruck-Ablationskammer-Gasfluss-Vakuum-Pumpe-Anordnung 1. Über eine regelbare Gaszufuhr 41 wird Zellgas 43 in eine Ablationskammer geleitet 2. In der Ablationskammer befindet sich eine Probe 3, die durch ein Zellfenster 21 mit einem Laserstrahl 22 beschossen wird, so dass sich ein primäres Ablations-Plasma ausbildet. Dieses primäre Ablations-Plasma kondensiert während der Expansion dann zu einem Aerosol. Eine Gasfluss-Vakuum-Pumpe 6 befindet sich in Gasflussrichtung hinter der Ablationskammer 2. Ein inneres Rohr 62 von der Gasfluss-Vakuum-Pumpe 6 ist von der Ablationskammer 2 abgehend angeordnet. Ein äußeres Rohr 61 der Gasfluss-Vakuum-Pumpe 6 wird nach der Ablationskammer 2 und vor dem Expansionsraum 64 zu dem inneren Rohr 62 geführt und konzentrisch um das innere Rohr 62 angeordnet. Die Gasfluss-Vakuum-Pumpe 6 fördert über die Düse 63 sich in dem inneren Rohr 62 befindliches Probengas aus der Ablationskammer 2 durch hohe Strömungsgeschwindigkeiten des Mischgases 44 in dem äußeren Rohr 61 mit. In dem Expansionsraum 64 der Gasfluss-Vakuum-Pumpe 6 werden das Probengas und das Mischgas 44 vor Weiterführung zu einer Analytik zusammengeführt. Über eine Druckmesseinrichtung 5 wird der Druck in der Ablationskammer 2 kontrolliert. Über die regelbaren Gaszufuhren 41, 42 in Kombination mit der Druckmesseinrichtung 5 finden eine Kontrolle und Regelung des Betriebsdruckes in der Ablationskammer 2 statt, wobei die Ablationskammer 2 mit Unterdruck betrieben wird.

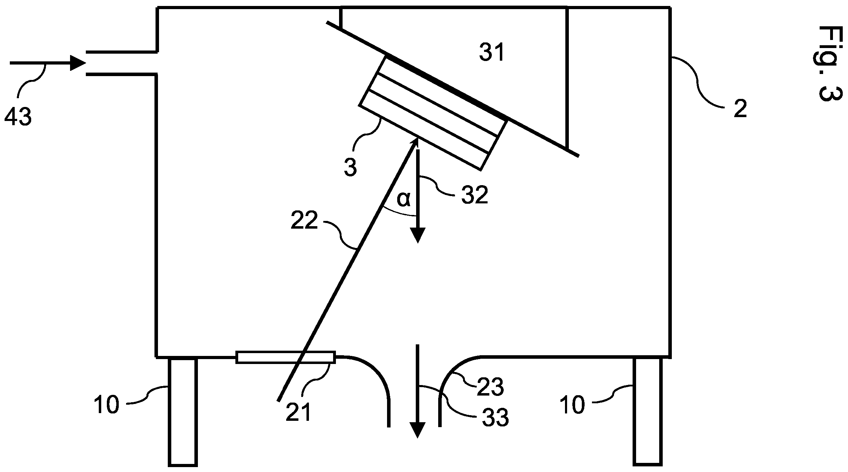

**Fig. 3** zeigt eine beispielhafte Darstellung einer Ausführungsvariante einer Ablationskammer 2 einer erfindungsgemäßen Unterdruck-Ablationskammer-Gasfluss-Vakuum-Pumpe-Anordnung 1. Die in Fig. 3 gezeigte Ablationskammer 2 basiert prinzipiell auf der Ablationskammer 2 aus Fig. 2. Der in Fig. 2 gezeigte Druckmesser 5 ist in Fig. 3 nicht gezeigt. Zellgas 43 strömt wie gemäß Fig. 2 durch einen Einlass in die Ablationskammer 2.

In der Ausführung gemäß Fig. 3 sind Stützbeine 10 an der Unterseite der Ablationskammer 2 angebracht. Bei bestimmungsgemäßer Benutzung der Anordnung weisen diese Stützbeine 10 nach unten. Die Probe 3 ist im Gegensatz zur Fig. 2 nicht im unteren Bereich der Ablationskammer 2 angeordnet, sondern im oberen Bereich. Hierzu wird die Probe 3 von einem Probenhalter 31 gehalten. Die untere Fläche des Probenhalters 31, an der die Probe 3 angeordnet ist, ist gegenüber einer Horizontalen geneigt. Im Falle einer Probe 3 mit im Wesentlichen parallelen Hauptflächen, beispielsweise einer quaderförmigen Probe 3, ist somit auch eine Hauptfläche der Probe 3 bzw. ein Flächenbereich dieser Probe 3, auf die/den der Laserstrahl 22 treffen soll, gegenüber einer Horizontalen geneigt, weist aber im Allgemeinen nach unten.

Das Zellfenster 21 ist gemäß Fig. 3 in einer unteren Wand der Ablationskammer 2 angeordnet. Durch dieses Zellfenster 21 kann der Laserstrahl 22 auf die Probe 3 treffen. Der Laserstrahl 22 trifft also auf eine im Allgemeinen nach unten weisende Fläche der Probe 3, um Probenmaterial zu lösen. Der Laserstrahl 22 trifft im Wesentlichen senkrecht auf die Oberfläche der Probe 3.

Die Richtung des Laserstrahls 22 schließt mit der Richtung der Schwerkraft 32 einen Winkel α ein. Dieser Winkel α kann im Prinzip zwischen 0° und 90° betragen, wobei aber ein von 0° verschiedener Winkel bevorzugt ist, beispielsweise im Bereich von 10° bis 80°. Der Winkel α kann beispielsweise größer oder gleich einem Minimalwinkel von 20°, 30°, 40°, 45°, 50° oder 60° sein und/oder kleiner oder gleich einem Maximalwinkel von 70°, 60°, 50°, 45°, 40° oder 30° sein.

Weil der Flächenabschnitt der Probe 3, auf den der Laserstrahl 22 treffen soll, im Allgemeinen nach unten weist, wird von der Probe 3 abgelöstes Probenmaterial auch unter Ausnutzung der Schwerkraft 32 nach unten transportiert, also von der Probe 3 weg. Dadurch kann gegebenenfalls vermieden werden, dass sich bereits abgelöstes Probenmaterial an der Probenoberfläche ansammelt. Zudem kann so gegebenenfalls die Ausbeute an Probenmaterial, das dem nachgeschalteten Analysegerät (in Fig. 3 nicht gezeigt) zugeführt werden kann, erhöht werden.

Wie im Zusammenhang mit Fig. 2 beschrieben, bildet das von der Probe 3 abgelöste Probenmaterial auch gemäß Fig. 3 ein Aerosol 33, das insbesondere durch die Gasfluss-Vakuum-Pumpe 6 (in Fig. 3 nicht gezeigt) dem Analysegerät zugeführt wird. Um den Transport des Aerosols 33 zum Analysegerät weiter zu unterstützen, kann der für das Aerosol 33 vorgesehene Auslass 23 aus der Ablationskammer 2 in der unteren Wand der Ablationskammer 2 angeordnet sein, wie es in Fig. 3 gezeigt ist. Insbesondere kann dieser Auslass 23 unter der von dem Laserstrahl 22 zu treffenden Stelle der Probe 3 angeordnet sein. Insbesondere kann in Projektion von oben (entlang der Richtung der Schwerkraft 32) gesehen die von dem Laserstrahl 22 zu treffende Stelle der Probe 3 innerhalb des Querschnitts des Auslasses für das Aerosol 33 liegen, wie es in Fig. 3 der Fall ist. Alternativ kann der Auslass 23 für das Aerosol 33 auch an einer anderen Stelle der Wand der Ablationskammer 2 angeordnet sein, also auch beispielsweise an einer Seitenwand.

Ein Winkel α von 0° zwischen Laserstrahl 22 und Richtung der Schwerkraft 32 ist nicht bevorzugt, u.a. deshalb, weil von der Probe 3 abgelöstes Probenmaterial, wenn es sich, insbesondere bedingt durch die Schwerkraft 32, senkrecht nach unten bewegt, den Laserstrahl 22 zumindest teilweise blockieren könnte und sich zudem auf dem Zellfenster 21 ansammeln könnte.

Der Auslass 23 für das Aerosol 33 weist in dem in Fig. 3 gezeigten Beispiel die Form eines Trichters 23 auf. Der Querschnitt des Auslasses 23 kann sich beginnend an der Ablationskammer 2 linear reduzieren - in einer Ansicht von der Seite ergäbe sich in etwa eine Dreiecksform. Alternativ kann sich der Querschnitt des Auslasses 23 aber auch in anderer Weise verringern, beispielsweise so, wie es in Fig. 3 gezeigt ist - in einer Ansicht von der Seite folgt die Form des Trichters 23 in diesem Beispiel einem Viertelkreis. Auch andere Formen sind möglich. Durch einen abnehmenden Querschnitt im Trichter 23 steigt die Strömungsgeschwindigkeit das Aerosols 33 in diesem Trichter 23 und damit sinkt die Wahrscheinlichkeit, dass sich Aerosolpartikel an den Wänden absetzen.

Ausführungsformen ohne Trichter sind auch möglich und erlauben gegebenenfalls eine einfachere Konstruktion. In diesem Fall kann sich ein Rohr mit gleichbleibendem Querschnitt direkt als Auslass 23 an die Ablationskammer 2 anschließen.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung der Fachperson eine Anleitung zur Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand sowie seinen rechtlichen Äquivalenten abgewichen wird. Die vorliegend beschriebenen Merkmale können jeweils, soweit dies nicht ausdrücklich ausgeschlossen wird oder technisch unmöglich ist, beliebig miteinander kombiniert werden. Ebenso können die vorwiegend im Zusammenhang mit einem hier offenbarten Aspekt oder einer hier offenbarten Ausführungsform beschriebenen Merkmale entsprechend Merkmale der anderen hier offenbarten Aspekte oder Ausführungsformen darstellen. Im Übrigen sind sämtliche hier offenbarten Aspekte und Merkmale entweder in Alleinstellung oder in Kombination als Aspekte der vorliegenden Erfindung anzusehen.

### Bezugszeichenliste

- 1: Unterdruck-Ablationskammer-Gasfluss-Vakuum-Pumpe-Anordnung
- 2: Ablationskammer/-zelle
- 21: Zellfenster
- 22: Laserstrahl
- 23: Auslass, Trichter
- 3: Probe
- 31: Probenhalter
- 32: (Richtung der) Schwerkraft
- 33: Probenmaterial, Aerosol
- 4: Regelbare Gaszufuhr, Massendurchflussregler
- 41: Regelbare Gaszufuhr für Zellgas
- 42: Regelbare Gaszufuhr für Mischgas
- 43: Zellgas
- 44: Mischgas
- 5: Druckmesser
- 6: Gasfluss-Vakuum-Pumpe
- 61: äußeres Rohr für Mischgasfluss
- 62: inneres Rohr für Probengasfluss
- 63: Düse
- 64: Expansionsraum
- 7: Verbindungsstück zum Zusammenführen von Proben- und Mischgas
- 8: Plasma-Ionenquelle (ICP)
- 9: Massenspektrometer
- 10: Stützbeine

## Patentansprüche

1. Ablationskammer-Gasfluss-Vakuum-Pumpe-Anordnung (1) zur Laser-Ablation für Feststoffanalytik umfassend:
- eine Ablationskammer (2) zur Benutzung mit einem Laser, insbesondere eine Ablationskammer (2) mit einem Laser;
- eine Gasfluss-Vakuum-Pumpe (6);
- eine Gaszufuhr für Zellgas (41); und
- eine Gaszufuhr für Mischgas (42),
wobei:
- die Gasfluss-Vakuum-Pumpe (6) ein erstes Rohr für Probengas (62), ein zweites Rohr für Mischgas (61), eine Düse (63) und einen Expansionsraum (64) aufweist;
- die Gasfluss-Vakuum-Pumpe (6) in Gasflussrichtung hinter der Ablationskammer (2) angeordnet ist;
- das erste Rohr (62) von der Ablationskammer (2) abgehend angeordnet ist;
- das erste Rohr (62) an der Düse (63) am Übergang zum Expansionsraum (64) endend angeordnet ist;
- das zweite Rohr (61) zum Expansionsraum (64) endend angeordnet ist;
- die Gaszufuhren (41, 42) und die die Gasfluss-Vakuum-Pumpe (6) so konfiguriert sind, dass die Ablationskammer (2) mit Unterdruck gegenüber atmosphärischem Druck betrieben wird;
wobei die Ablationskammer-Gasfluss-Vakuum-Pumpe-Anordnung (1) so eingerichtet ist, dass
- in der Ablationskammer (2) aus einer Probe ein primäres Ablations-Plasma gebildet und zu einem Aerosol kondensiert wird und zusammen mit dem Zellgas (43) das Probengas bildet;
- die Gasfluss-Vakuum-Pumpe (6) über die Düse (63) sich in dem ersten Rohr (62) befindliches Probengas aus der Ablationskammer (2) durch die Strömung des Mischgases (44) in dem zweiten Rohr (61) mitfördert
und
- in dem Expansionsraum (64) das Probengas und das Mischgas (44) vor Weiterführung zu einer Analytik zusammengeführt werden.

2. Anordnung (1) nach Anspruch 1,
**dadurch gekennzeichnet, dass**
die Anordnung ferner eine Druckmesseinrichtung (5) aufweist und die Gaszufuhren (41, 42) regelbar sind,
wobei die regelbaren Gaszufuhren (41, 42) und die Druckmesseinrichtung (5) für eine Kontrolle und Regelung der Betriebsbedingungen in der Ablationskammer (2) ausgebildet sind, um die Ablationskammer (2) mit dem Unterdruck zu betreiben.

3. Anordnung (1) nach Anspruch 1 oder 2,
**dadurch gekennzeichnet, dass**
das erste Rohr (62) ein inneres Rohr (62) ist und das zweite Rohr (61) ein äußeres Rohr (61) ist, das nach der Ablationskammer (2) und vor dem Expansionsraum (64) dem inneren Rohr (62) zugeführt und um das innere Rohr (62), insbesondere konzentrisch um das innere Rohr (62), angeordnet ist.

4. Anordnung (1) nach einem der vorhergehenden Ansprüche,
**dadurch gekennzeichnet, dass**
die Analytik als Massenspektrometrie (9) mit induktiv gekoppeltem Plasma (8) (ICP-MS) ausgebildet ist.

5. Anordnung (1) nach einem der vorhergehenden Ansprüche,
**dadurch gekennzeichnet, dass**
die Gaszufuhren (41, 42) als Massendurchflussregler ausgebildet sind.

6. Anordnung (1) nach einem der vorangehenden Ansprüche,
**dadurch gekennzeichnet, dass**
als Zellgas (43) Helium oder Argon eingesetzt wird.

7. Anordnung (1) nach einem der vorangehenden Ansprüche,
**dadurch gekennzeichnet, dass**
als Mischgas (44) Argon eingesetzt wird.

8. Anordnung (1) nach einem der vorangehenden Ansprüche,
**dadurch gekennzeichnet, dass**
die Ablationskammer-Gasfluss-Vakuum-Pumpe-Anordnung (1) so eingerichtet ist, dass in der Ablationskammer (2) bei Betrieb ein Unterdruck entsprechend einem Absolutdruck von ≤ 0,9 bar oder ≤ 0,8 bar oder ≤ 0,75 bar oder ≤ 0,7 bar oder ≤ 0,6 bar oder ≤ 0,5 bar oder ≤ 0,4 bar oder ≤ 0,3 bar oder ≤ 0,2 bar ausgebildet wird.

9. Anordnung (1) nach einem der vorangehenden Ansprüche,
**dadurch gekennzeichnet, dass**
die Ablationskammer (2) einen Probenhalter aufweist, der eingerichtet ist, die Probe (3) so zu halten, dass bei bestimmungsgemäßer Benutzung der Anordnung (1) ein Laserstrahl (22), der von dem mit der Anordnung (1) zu benutzenden Laser ausgeht, auf einen Flächenabschnitt der Probe (3) trifft, dem eine Flächennormale zugeordnet ist, die von der Probe weg gerichtet ist und die eine Richtungskomponente aufweist, die bezogen auf die Schwerkraftrichtung nach unten gerichtet ist.

10. Anordnung (1) nach einem der vorangehenden Ansprüche,
**dadurch gekennzeichnet, dass**
die Ablationskammer (2) einen Auslass (23) für das Aerosol (33) aufweist, der bei bestimmungsgemäßer Benutzung der Anordnung (1) unterhalb des von dem Laserstrahl (22) zu treffenden Flächenabschnitts der Probe (3) liegt, insbesondere derart, dass in Projektion von oben entlang der Richtung der Schwerkraft (32) gesehen der von dem Laserstrahl (22) zu treffende Flächenabschnitt der Probe (3) innerhalb des Querschnitts des Auslasses (23) für das Aerosol (33) liegt.

11. Anordnung (1) nach Anspruch 10,
**dadurch gekennzeichnet, dass**
der Auslass (23) eine Trichterform aufweist.

12. Verfahren zur Laser-Ablation für Feststoffanalytik unter Verwendung einer Anordnung (1) nach einem der vorangehenden Ansprüche,
**dadurch gekennzeichnet, dass**
die Ablationskammer (2) mit einem Unterdruck entsprechend einem Absolutdruck von ≤ 0,9 bar oder ≤ 0,8 bar oder ≤ 0,75 bar oder ≤ 0,7 bar oder ≤ 0,6 bar oder ≤ 0,5 bar oder ≤ 0,4 bar oder ≤ 0,3 bar oder ≤ 0,2 bar betrieben wird.

13. Verfahren nach Anspruch 12,
**dadurch gekennzeichnet, dass**
als Zellgas (43) Argon eingesetzt wird.
